# EUROPÄISCHE PATENTSCHRIFT

(11) **EP 1 176 170 B1**
(45) Veröffentlichungstag und Bekanntmachung des Hinweises auf die Patenterteilung: **05.04.2006**
(21) Anmeldenummer: 00115907.8
(22) Anmeldetag: 25.07.2000
(51) Int. Cl.: C08L 63/00, E04D 5/06, E04B 1/66, C08L 23/08

(54) **Abdichtungsbahnen für das Bauwesen sowie Verfahren zu deren Herstellung und Verwendung**
Sealing strips for the construction industry and method for producing and using the same
Rubans d'étanchéité pour l'industrie du bâtiment et leur procédé de fabrication et d'utilisation

(43) Veröffentlichungstag der Anmeldung: 30.01.2002
(73) Patentinhaber: HUBER & SUHNER AG, CH-8330 Pfäffikon (CH)
(72) Erfinder: Durham, Richard, 8707 Uetikon am See (CH); Götz, Otto, 8320 Fehraltorf (CH)
(74) Vertreter: Hepp, Dieter

(56) Entgegenhaltungen:
- WO-A-93/22378
- GB-A- 1 311 471
- US-A- 4 758 629

## Beschreibung

Die Erfindung bezieht sich auf Abdichtungsbahnen, sie bezieht sich auf Verfahren zum Herstellen und zum Verbinden solcher Abdichtungsbahnen mit einem Untergrund bzw. mit sich selbst, ferner bezieht sie sich auf die Verwendung derartiger Abdichtungsbahnen im Bauwesen, insbesondere als Fugenabdichtungen, Fassadenbänder und Dachbahnen gemäss der Definition der Patentansprüche.

Abdichtungsbahnen werden im Bauwesen zum Abdichten von kleinen aber auch grossen Oberflächenbereichen wie Fugen, Dächer, Fassaden, usw. eingesetzt. Bspw. werden mit ihnen Bau- und Dehnfugen, Arbeitsfugen, Bewegungsfugen, Anschlüsse, Betonieretappen, Risse, Durchbrüche, punktuelle Abklebungen, Bindestellen, Fehlstellen, usw. dicht überbrückt. Insbesondere werden sie an Dehnfugen von Rohbauten eingesetzt und unterliegen dabei positiven bzw. negativen wasserdrucken.

Bekannte Abdichtungsbahnen bestehen aus Materialien wie bspw. Polyvinylchlorid (PVC), Polyethylen (PE), Polypropylen sowie anderen Polymeren oder deren Co- bzw. Terpolymeren. Die Verbindung mit dem Untergrund resp. mit sich selbst erfolgt durch Verkleben und/oder durch Verschweissen. Bspw. erfolgt das Verkleben mit Epoxyklebern, Silikondichtungsmassen, usw. und das Verschweissen bspw. durch Heissluftverschweissen. Auch ein Fügen von Stössen von Abdichtungsbahnen erfolgt durch derartiges Verkleben bzw. Verschweissen.

Abdichtungsbahnen werden ungeträgert bzw. geträgert als Dehnzonenbereiche appliziert. Hierzu werden sie in der Regel vorbehandelt. Bspw. werden Abdichtungsbahnen vorgängig mit einem Haftvermittler (Primer), oder mittels Korona- resp. Plasmabehandlung oberflächenaktiviert, um so eine Verbindung mit dem Untergrund zu ermöglichen. Oder Abdichtungsbahnen werden bereichsweise mit einer Trägerschicht versehen, über welche die Verbindung mit dem Untergrund hergestellt wird. Bspw. sind die Trägerschichten im Bereich der seitlichen Ränder der Abdichtungsbahnen bereichsweise als textile Streifen (Randstreifen) angebracht. In der Regel lassen sich nur vorgängig aktivierte Oberflächenbereiche von trägerlosen Abdichtungsbahnen bzw. nur bereichsweise mit Trägerschichten versehene Abdichtungsbahnen sicher und dauerhaft mit dem Untergrund bzw. mit sich selbst verbinden. Die Verbindung nichtaktivierter Oberflächenbereiche der Abdichtungsbahnen bzw. ungeträgerter Bereiche der Abdichtungsbahnen mit dem Untergrund bzw. mit sich selbst ist meistens deutlich schlechter, unsicher und nicht dauerhaft.

Trägerfreie Abdichtungsbahnen sind oft nur bedingt lagerfähig, bspw. werden sie über Trennschichten zueinander beabstandet aufgerollt, um so ein gegenseitiges unbeabsichtigtes Verschweissen aneinander liegender Lagen von Abdichtungsbahnen zu verhindern. Das Aufrollen der Abdichtungsbahnen mit Trennschichten ist aufwendig, auch müssen Trennschichten vor einer Verwendung entfernt werden.

Darüber hinaus nimmt das Bedürfnis nach ökologisch unbedenklichen Bauerzeugnissen in Hinblick auf ihre schadstofffreie Entsorgung zu.

Die Qualität der Abdichtung hängt stark von der Beschaffenheit und Struktur des Untergrundes ab, sowie von der Funktionalität der eingesetzten Polymere:
So wird in der Regel das Aufeinandertreffen von mehreren Fugen durch Verschweissen von mehreren, übereinander applizierten Lagen von Abdichtungsbahnen gelöst. Bei Verwendung von trägerlosen Abdichtungsbahnen gestaltet sich hier eine vorgängige Aktivierung aller Oberflächenbereiche als schwierig. Bspw. entstehen durch ein solches Verschweissen neue, nicht oberflächenaktivierte Bereiche, welche entsprechend schlecht, unsicher und nicht dauerhaft mit dem Untergrund bzw. mit sich selbst verbindbar sind.

Auch ist das Aufbringen von geträgerten Abdichtungsbahnen an Fugen schwierig, da die Verbindung der ungeträgerten Bereiche der Abdichtungsbahnen mit dem Untergrund in der Regel deutlich schlechter ist als diejenige der Trägerschichten. Die Gefahr einer ungenügenden und zu einem Schadenfall führenden Verbindung ist daher gegeben.

Derartige Lösungen in mehreren Arbeitsschritten sind nachteilig. Sie machen die Herstellung der Abdichtungsbahnen kompliziert und teuer. Auch machen sie die Verwendung der Abdichtungsbahnen aufwendig und zeitintensiv. Schliesslich stellen sie ein potentielles Sicherheitsrisiko dar.

Die Aufgabe der Erfindung besteht darin, die vorgenannten Nachteile zu beheben.

Insbesondere soll die Abdichtungsbahn ohne vorgängige Oberflächenaktivierung, insbesondere unter Verzicht eines Primers, mit einem Untergrund resp. mit sich selbst verbindbar sein. Eine weitere Aufgabe besteht darin die Zusammensetzung der Abdichtungsbahn und ein Verfahren zu ihrer Herstellung so zu wählen, dass die Abdichtungsbahn für eine Exposition mit Trinkwasser geeignet ist und eine Trinkwasserzulassung erreicht. Die Erfindung soll Abdichtungsbahnen bereitstellen, die sowohl einfach und kostengünstig in der Herstellung und Lagerung sind, als auch einfach, rasch und sicher in der Verwendung, und die sich mit bewährten und erprobten Techniken kompatibel erweisen. Die Abdichtungsbahnen sollen vom Markt akzeptiert werden und einfach zu entsorgen sein. Ferner soll die Erfindung ein Verfahren zum Herstellen bzw. zum verbinden von Abdichtungsbahnen bereitstellen und sie soll eine Verwendung der Abdichtungsbahnen im Bauwesen, Fugenabdichtungen, Fassadenbänder und Dachbahnen bereitstellen.

Diese Aufgabe wird durch die in den Patentansprüchen definierte Erfindung gelöst.

Die Erfindung löst diese Aufgabe, indem sie Abdichtungsbahnen bereitstellt, die nebst den Materialeigenschaften zur Bildung von Dehnzonenbereichen mindestens ein Polymer mit mindestens einer Epoxy-Funktion für Kleb- und/oder Schweissverbindungen mit dem Untergrund bzw. mit sich selbst enthalten. Das Verkleben erfolgt insbesondere mit Epoxyklebern. Darüber hinaus können auch Silikondichtungsmassen verwendet werden. Das Verschweissen erfolgt bei höheren Temperaturen, insbesondere durch Heissluftverschweissen. Durch ein unmittelbares Verbinden mit dem Untergrund, wie z.B. Beton bzw. mit sich selbst entfallen zusätzliche Arbeitsschritte wie die vorgängige Aktivierung aller Oberflächenbereiche bzw. das bereichsweise Versehen mit einer oder mehreren Trägerschichten. Die Verwendung der Abdichtungsbahnen wird demgemäss vereinfacht. Auch stellen diese Abdichtungsbahnen kein potentielles Sicherheitsrisiko dar, falls bspw. der Primer für eine Oberflächenbehandlung vergessen wurde bzw. die verbindung mittels Trägerschichten undicht ist.

Die Abdichtungsbahnen lassen sich unmittelbar und bereichsunabhängig mit dem Untergrund bspw. durch Verkleben verbinden. Sie besitzen eine sehr gute Verschweissbarkeit mit sich selbst, so dass beim Aufeinandertreffen mehrerer Fugen, sichere und dauerhafte Verbindungen von übereinander applizierten Lagen Abdichtungsbahnen auf einfache Art und Weise rasch zu bewerkstelligen sind.

Die die erfindungsgemässe Abdichtungsbahn bildende Zusammensetzungen sind so ausgewählt, dass bei der Lagerung ein gegenseitiges Verschweissen aufgerollter, aneinander liegender Lagen von Abdichtungsbahnen nicht auftritt, trennende Schichten werden nicht mehr benötigt und die Herstellung vereinfacht. Die erfindungsgemässen Abdichtungsbahn enthalten an ihrer Oberfläche keine vernetzbaren Gruppen, die bei Lagerung insbesondere bei erhöhter Umgebungstemperatur zu einer Vernetzungsreaktion (chemisches Veschweissen) führen würden. Thermoplastisches Verschweissen, das auf einer Diffusion von Polymerketten beruht, ist dagegen erfindungsgemäss beim bzw. oberhalb des Erweichungspunktes durchführbar.

Abdichtungsbahn zur Verwendung im Bauwesen, bestehend aus einer Zusammensetzung enthaltend thermoplastische Polymere, dadurch gekennzeichnet, dass die Zusammensetzung mindestens ein epoxy-funktionelles Polymer in einer solchen Menge enthält, dass die Abdichtungsbahn nach Verklebung mit einem Epoxykleber eine Haftkraft gemessen nach DIN 18555 von grösser oder gleich 2 N/mm² und/oder eine Schälkraft gemessen nach DIN 53357 von grösser oder gleich 50 N/cm aufweist.

In einer bevorzugten Ausführungsform beträgt die nach Verklebung mit einem Epoxykleber ohne vorherige Oberflächenaktivierung erreichte Schälkraft des Abdichtungsbandes 70 N/cm.

Teil der vorliegenden Erfindung ist weiterhin ein Verfahren zum Herstellen einer Abdichtungsbahn für die Verwendung im Bauwesen, enthaltend die folgenden Schritte
- Bereitstellen einer Zusammensetzung enthaltend mindestens ein thermoplastisches Polymer und mindestens ein Epoxygruppen enthaltendes Polymer;
- Auswählen des thermoplastischen Polymeren oder der Mischung thermoplastischer Polymere insbesondere derart, dass die Zugfestigkeit nach ISO 527 einer aus diesen Polymeren bestehenden Abdichtungsbahn in Beanspruchungsrichtung grösser oder gleich 6 MPa ist;
- Zugabe des Epoxygruppen enthaltenden Polymeren in einer solchen Menge, dass die Abdichtungsbahn nach Verklebung mit einem Epoxykleber eine Haftkraft gemessen nach DIN 18555 von grösser oder gleich 2 N/mm² und/oder eine Schälkraft gemessen nach DIN von grösser oder gleich 50 N/cm aufweisen, bevorzugt grösser oder gleich 70 N/cm;
- Überführung der Zusammensetzung in einen homogenen Zustand;
- Formen der homogenen Zusammensetzung zu einer Abdichtungsbahn.

Unter dem Begriff "homogen" soll eine makroskopisch einheitliche Zusammensetzung bezeichnet werden entsprechend Römpp, ChemieLexikon, Georg Thieme Verlag, Stuttgart, 9. Auflage, S. 1844.

Das Formen zu einer Abdichtungsbahn wird vorzugsweise durch Extrudieren erreicht, Techniken wie Kalandrieren sind jedoch ebenfalls einsetzbar.

Die Abdichtungsbahn kann in einer bevorzugten Ausführungsform auch aus mehreren Schichten mit oder ohne Armierung aufgebaut sein. Wenigstens eine der Schichten entspricht von ihrer Zusammensetzung der Zusammensetzung der erfindungsgemässen Abdichtungsbahn.

Als Epoxykleber sind handelsübliche 2-Komponenten Kleber wie Rivalcoll Concresive 1402 von MBT einsetzbar.

Im folgenden wird die Erfindung anhand von drei Tabellen im Detail erläutert:
- Tabelle 1: gibt ein Rezept einer beispielhaften Zusammensetzung von Abdichtungsbahnen an,
- Tabelle 2: ist eine Liste der am Rezept einer ersten beispielhaften Zusammensetzung von Abdichtungsbahnen gemäss Tabelle 1 beteiligten Polymere geordnet nach ihrer Funktionalität und
- Tabelle 3: gibt Rezepte von weiteren beispielhaften Zusammensetzungen von Abdichtungsbahnen an.

**Tabelle 1: Rezept 1 einer beispielhaften Zusammensetzung von Abdichtungsbahnen:**

| Polymer/Additiv: | Bezeichnung: | Name: | Anteil in Gew %: |
|---|---|---|---|
| Paraloid KM334 ER | Acrylat Schlagzähmodifier | p(Butylacrylat / methylmethacrylat) p(BA/MMA) Calciumcarbonat -2% | 10 |
| Lotader AX 8840 | E-GMA | Copolymer Ethylen + Glycidylmethacrylat 8% | 18 |
| Engage 8480 VLDPE | Metallocen VLDPE | Copolymer Ethylen + Octen-1 | 10 |
| Lotader AX 8900 | E-CO-GMA | Terpolymer Ethylen / Methylacrylat 24% Glycidylmethacrylat 7% | 40 |
| Elvaloy AM | E-nBA-GMA | Terpolymer Ethylen / Methylacrylat 9% Glycidylmethacrylat 5,25% | 0 |
| Lotryl 9MA02 | E-MA | Copolymer Ethylen / Methylacrylat 24% | 0 |
| Evatane 24-03 | E-VA | Copolymer Ethylen / Vinylacetat 9% VA | 20 |
| Irganox 1010 | Stabilisator | Pentaerythritol-tetrakis[3-(3,5-di-tert-butyl-4-hydroxyphenyl)proprionat] | 0,4 |
| Naugard XL1 | Stabilisator | 2,2-oxamido bis-[ethyl 3-(3,5-di-tert-butyl-4 hydroxyphenyl)proprionat] | 0,4 |
| Tinuvin 783 FDL | (UV-Stabilisator A) (UV-Stabilisator B) | Poly[[6-[(1,1,3,3-tetramethylbutyl) Amino]-1,3,5-triazine-2,4-diyl] [2,2,6,6-tetramethyl-4-piperidinyl)imino]-1,6-hexandiyl[2,2,6,6-tetramethyl-4-piperidinyl)imino]] Butandioicsäure, Dimethylester, Polymer mit 4-hydroxy-2,2,6,6-tetramethyl-1-piperidine ethanol | 0,2 |
| Farbbatch | Disperbatch Grau | EVA, Titandioxid, Russ | 1 |

**Tabelle 2: Liste der am Rezept 1 einer beispielhaften Zusammensetzung von Abdichtungsbahnen gemäss Tabelle 1 beteiligten Polymere geordnet nach ihrer Funktionalität:**

| Polymer/Additiv: | Bezeichnung: | Funktionalität: | Anteil in Gew %: |
|---|---|---|---|
| Paraloid KM334 ER (Polymer) | Acrylat Schlagzähmodifier | Epoxidverklebung | 10 |
| Lotader AX 8840 (Polymer) | E-GMA | Mechanik | 18 |
| Engage 8480 VLDPE (Polymer) | Metallocen VLDPE | Weichheit, Mechanik | 10 |
| Lotader AX 8900 (Polymer) | E-MA-GMA | Epoxidverklebung, Weichheit, Heissluftverschweissung | 40 |
| Elvaloy AM (Polymer) | E-nBA-GMA | Epoxidverklebung, Weichheit, Heissluftverschweissung | 0 |
| Lotryl 9MA02 (Polymer) | E-MA | Mechanik | 0 |
| Evatane 24-03 (Polymer) | E-VA | Weichheit, Heissluftverschweissung | 20 |
| Diverse Stabilisatoren (Additiv) | Stabilisator | Wärme- und UV-Stabilität | 1 |
| Farbbatch (Additiv) | Disperbatch Grau | Farbe | 1 |

**Tabelle 3: Liste von Rezepten von beispielhaften Zusammensetzung von Abdichtungsbahnen (2mm Dicke):**

| Polymer/Additiv: | Anteil in Gew % bei Rezept 1: | Anteil in Gew % bei Rezept 2: | Anteil in Gew % bei Rezept 3: | Anteil in Gew % bei Rezept 4: |
|---|---|---|---|---|
| Paraloid KM334 ER | 10 | 10 | 10 | 10 |
| Lotader AX 8840 | 18 | 18 | 18 | 0 |
| Engage 8480 VLDPE | 10 | 10 | 10 | 10 |
| Lotader AX 8900 | 40 | 0 | 0 | 0 |
| Elvaloy AM | 0 | 40 | 0 | 0 |
| Lotryl 9MA02 | 0 | 0 | 0 | 58 |
| Evatane 24-03 | 20 | 20 | 60 | 20 |
| Diverse Stabilisatoren | 1 | 1 | 1 | 1 |
| Farbbatch | 1 | 1 | 1 | 1 |
| Haftkraft (N/mm²) | >2,75 | >2,75 | 0,6 | 0,5 |
| Schälkraft (N/cm) | >70 | >70 | 23 | 12 |

Die Definition des Begriffs thermoplastische Polymere erfolgt nach Römpp, Chemie Lexikon, Georg Thieme Verlag, Stuttgart 9. Auflage, S.4570. Es handelt sich Polymere, die keine Quervernetzungen zu anderen Polymeren aufweisen oder ausbilden können.

Thermoplastische Polymere, die sich für die Verwendung in Abdichtungsbahnen eignen, sind dem Fachmann seit langem bekannt und in der Fachliteratur umfangreich beschrieben. Es eignen sich sowohl polare Thermoplaste wie beispielsweise Butylacryat/methylmethacrylat, Ethylenvinylacetat bzw. andere methylacrylathaltige Copolymere als auch apolare Thermoplaste wie z.B. Copolymere aus Ethylen mit Octen, EPDM, usw.

Der Fachmann erreicht durch die Mischung von "harten" thermoplastischen Polymeren wie z.B. LDPE (low density polyethylen) und weichen thermoplastischen Polymeren wie z.B. Ethylenvinylacetat die Einstellung der für Abdichtungsbahnen geforderten Eigenschaften. Diese müssen auf der einen Seite widerstandfähig gegen Umweltbelastung (Feuchtigkeit, Kälte, Hitze, pH-Schwankungen, Schadstoffe bzw. aus Untergrund oder Auflagen diffundierenden Substanzen) sein, auf der anderen Seite müssen sie aber auch biegsam, flexibel und dehnbar sein. In gewisser Hinsicht sind dies seitens der Polymerauswahl gegensätzliche Eigenschaften; optimierte Eigenschaften in Hinblick auf die Eigenschaften der Abdichtungsbahn kann bei Bedarf insbesondere durch Polymerabmischungen erreicht werden.

Die für die erfindungsgemässe Abdichtungsbahn verwendeten thermoplastischen Polymere enthalten dementsprechend keine vernetzbaren, funktionellen Gruppen. Sie enthalten keine Halogen und/oder Schwefel- Gruppierungen. Die Abdichtungsbahn der vorliegenden Erfindung ist sowohl schwermetall- wie auch halogen- und bitumenfrei. Die Abdichtungsbahn ermöglicht somit eine ökologisch unbedenkliche Entsorgung sowie auch die Möglichkeit des Recyclierens bzw. Rückführung in den Produktionsprozess. Insbesondere werden bei einer Entsorgung durch Verbrennen keine Halogenwasserstoffverbindungen freigesetzt.

In einer bevorzugten Ausführungsform der vorliegenden Erfindung ist die Zugfestigkeit nach ISO 527 mindestens 6 MPa. Weiterhin liegt der Sekantenmodul gemäss ISO 527 der erfindungsgemässen Abdichtungsbahn vorzugsweise im Bereich zwischen 1 und 2% Dehnung, kleiner oder gleich 25 MPa .

In einer bevorzugten Ausführungsform haben die thermoplastischen Polymere einen Schmelzpunkt von mindestens 45°C, bevorzugt im Bereich von 50 - 150°C und noch bevorzugter von 60 - 130°C.

Herkömmliche trägerfreie Abdichtungsbahnen sind mit handelsüblichen Zwei-Komponenten Epoxyklebern nicht ohne vorherige Oberflächenaktivierung, bspw. nicht ohne vorherigen Auftrag eines Primers, verklebbar. Überraschenderweise hat sich gezeigt, dass durch die Beimischung mindestens eines Epoxygruppen enthaltenden Polymeren zu mindestens einem thermoplastischen Polymeren bzw. zu Mischungen thermoplastischer Polymere auf einen vorherigen Auftrag eines Primers verzichtet werden kann. Somit wird eine "oberflächenaktivierungslose" Verklebung der erfindungsgemässen Abdichtungsbahnen mit dem Untergrund bzw. mit sich selbst durch handelsübliche Epoxykleber erreicht. Die Verklebung ist jedoch auch durch weitere vernetzbare Gruppen enthaltende Klebzusammensetzungen möglich, insbesondere haben sich dabei Silikondichtungsmassen, insbesondere wenn diese auf Basis von Vinylsilanolen hergestellt sind, als geeignet erwiesen.

Der Anteil des epoxyfunktionellem Polymer in der die Abdichtungsbahn bildenden Zusammensetzung liegt im Bereich von 20 und 70 Gew.%, bevorzugt zwischen 30 und 60 Gew.% und noch bevorzugter zwischen 40 und 50 Gew.% bezogen auf das Gesamtgewicht der Zusammensetzung. Abgesehen von einem Anteil an Hilfsstoffen und Additiven bis zu 5 Gew.% bezogen auf das Gesamtgewicht der Zusammensetzung, bildet der Gewichtsanteil des thermoplastischen Polymeren bzw. Mischungen thermoplastischer Polymerer die Differenz zu Hundert. Höhere Anteile an Epoxygruppen enthaltenden Polymeren verteuern die Herstellung der Abdichtungsbahnen. Geringe Anteile an Epoxygruppen enthaltendem Polymer resultieren in ungenügenden Haft- und Schälkraften (siehe bspw. die Rezepte 3 und 4).

Der Gewichtsanteil der Epoxygruppen liegt bezogen auf das Gesamtgewicht der Zusammensetzung vorzugsweise im Bereich von 2 bis 12 Gew %, bevorzugt zwischen 3 und 10 Gew.% und noch bevorzugter zwischen 4 und 6 Gew.%.

Unter dem Begriff Epoxy-Gruppen wird eine Überbrückung von einer oder mehrerer C-C -Bindung/en durch die Gruppierung -O- verstanden. Derartige funktionelle Epoxidgruppen sind polar. Als Epoxygruppen enthaltende Polymere werden vorzugsweise Copolymere aus Kohlenwasserstoffen wie Ethylen und Glycidylmethacrylaten eingesetzt aber auch Terpolymere bspw. aus Ethylen, Methylacrylat und Glycidylmethacrylat.

Obwohl vergleichsweise in Bezug auf die Reaktivität der Epoxygruppe, reaktionsträge Polymere eingesetzt werden, kann nicht ausgeschlossen werden, dass ein gewisser Prozentsatz der Epoxygruppen während des Formens der Abdichtungsbahn insbesondere während der Extrusion, bspw. mit Luftfeuchtigkeit zu Hydroxylgruppen abreagieren. Im Abdichtungsband werden deshalb sowohl unreagierte Epoxidgruppen sowie abreagierte Epoxygruppen (und damit zu Epoxyfunktionen gewordenen Epoxygruppen) vorliegen. Im Zuge der vorliegenden Erfindung sollen unter Epoxy-Funktionen im Abdichtungsband sowohl unreagierte Epoxygruppen verstanden werden, als auch aus Epoxygruppen entstehende und ableitbare Verbindungen, wie z.B. die bei Reaktion mit Luftfeuchtigkeit entstehenden Hydroxylgruppen.

Weiterhin wird in der vorliegenden Erfindung der Begriff Epoxygruppen enthaltendes Polymer als Bezeichnung des Ausgangsmaterials gewählt, da für das Ausgangsmaterial von im wesentlichen unreagierten Epoxygruppen ausgegangen werden kann. Der Begriff epoxyfunktionelle Polymere soll den Zustand der im Abdichtungsband eingesetzten bzw. vorliegenden Epoxygruppen enthaltenden Polymere bezeichnen.

Die Epoxygruppen enthaltenden Polymere haben vorzugsweise ebenfalls thermoplastische Eigenschaften. Die Schmelzpunkte dieser bevorzugt eingesetzten Polymere liegen insbesondere im Bereich zwischen 50°C bis 130°C, bevorzugt zwischen 55°C und 120°C und noch bevorzugter zwischen 60°C und 110°C.

Bei thermoplastischen Polymeren mit einer Epoxygruppe handelt es sich bspw. um handelsübliche Polymere bzw. Polymergemische wie die Polymere Lotader AX8840 resp. Lotader AX8900 resp. Elvaloy AM, enthalten den "Baustein" Glycidylmethacrylat. Das Monomer Glycidylmethacrylat ist copolymerisiert mit weiteren Monomeren, so dass ein langkettiges Epoxygruppen enthaltendes Polymer entsteht. Dieses wäscht sich auch nach langen Expositionszeiten nicht aus den Abdichtungsbahnen aus. Dadurch erfüllen die Abdichtungsbahnen die Erfordernisse für eine Trinkwasserzulassung (gemessen gemäss den Vorschriften des schweizerischen Lebensmittelsbuches Kap. 48, Bedarfsgegenstände aus Kunststoff). Eventuelle Restbestände an monomeren Glycidylmethacrylat werden bei der Extrusion unter den gewählten Vakkuumbedingungen aus der zu extrudierenden Zusammensetzung vor Herstellung des Abdichtungsbandes entfernt. Auch können Polymere verwendet werden, die andere funktionelle Epoxygruppen enthaltenden Monomeren als Glycidylmethacrylat aufweisen. Der Fachmann hat bei Kenntnis der vorliegenden Erfindung diesbezüglich vielfältige Möglichkeiten, Polymere mit mindestens einer Epoxygruppe für die Herstellung von Abdichtungsbahnen zu verwenden, solange die Abdichtungsbahnen die Trinkwassezulassungsbedingungen erfüllen.

Das Polymer Paraloid KM334 ER, welches p(Butylacrylat / methylmethacrylat) enthält, wird vorzugsweise verwendet; es verbessert die Verklebbarkeit von Lotader AX8840 resp. Lotader AX 8900 resp. Elvaloy AM. Auch sorgt der Zusatz von Paraloid KM334 ER für mehr Haftung der Abdichtungsbahnen auf dem Untergrund bzw. im Kontakt mit sich selbst.

Die Polymere Paraloid KM334 ER, Evatane 24-03 und Glycidylmethacrylat besitzen eine hohe Polarität und bewirken eine hohe Oberflächenspannung der Abdichtungsbahnen. Zum Verbinden mit dem Untergrund müssen die Abdichtungsbahnen daher nicht mehr, wie im Stand der Technik, oberflächenaktiviert werden. Insbesondere wird diese hohe Polarität halogenfrei erzeugt, so dass ein einfaches Recyclieren resp. eine einfache Rückführung in den Produktionsprozess möglich ist.

Die Polymere mit mindestens einer Epoxy-Funktion lassen sich in Mischungsverhältnissen abstimmen. Gemäss Rezept 1 beträgt ihr Anteil an den Abdichtungsbahnen bspw. 18% Lotader AX 8840 und 40% Lotader AX 8900. Gemäss Rezept 2 beträgt ihr Anteil an den Abdichtungsbahnen bspw. 18% Lotader AX 8840 und 40% Elvaloy AM.

Insbesondere die Polymere Lotader AX 8840 resp. Engage 8480 VLDPE verstärken die mechanische Stabilität und Festigkeit der Abdichtungsbahnen. Gemäss DIN 53504 soll die Reissfestigkeit der erfindungsgemässen Abdichtungsbahnen grösser als 6 MPa sein und die Reissdehnung soll grösser 600% sein. Insbesondere gemäss DIN 53363 soll der Weiterreisswiderstand grösser 600 N/cm sein. Gemäss DIN 18555 soll die Haftkraft grösser 2 N/mm² sein und/oder gemäss DIN 53357 die Schälkraft grösser 50 N/cm. Tabelle 3 listet die Haftkraft als vertikale Haftzugsprüfung (VHZP) und die Schälkraft für verschiedene Rezepte auf. Daraus wird ersichtlich, dass die Haftkraft resp. Schälkraft für die Rezepte 3 und 4 ungenügend sind. Dies rührt daher, dass in Rezept 4 kein Polymer mit mindestens einer Epoxy-Funktion enthalten (0% Anteil Epoxy-Gruppen) ist und dass in Rezept 3 mit 1.4% eingesetzten Epoxygruppen bezogen auf das Gewicht der Zusammensetzung ein zu geringer Anteil an Epoxy-Funktionen im Abdichtungsband vorhanden ist. Diese Angaben sind beispielhaft und nicht beschränkend. Dem Fachmann steht es bei Kenntnis der vorliegenden Erfindung frei, andere Polymere in Abdichtungsbahnen zu verwenden, um eine unmittelbare, bereichsunabhängige, dauerhafte und sichere Verbindung mit einem Untergrund bzw. mit sich selbst zu erhalten.

Die Abdichtungsbahnen werden auf handelsüblichen Maschinen hergestellt. Die Abdichtungsbahnen werden in einem einzigen Verfahrensschritt als Endlosware bspw. durch Extrusion hergestellt und bspw. in Breiten zwischen 10 cm und 300 cm sowie in Dicken von 0,4 mm bis 3 mm auf Rollen aufgerollt. Entstandene Hydroxylgruppen an der Oberfläche des Dichtungsbandes könnten hinsichtlich der Verklebung mit Epoxyklebers zu vorteilhafter Reaktion (Vernetzung) mit den Epoxygruppen im Kleber führen und die Werte der Haft- und Schälkraft zusätzlich erhöhen.

Um das Abreagieren aller Epoxygruppen innerhalb der Abdichtungsbahn weitestgehend zu unterdrücken wird die Extrusion vorzugsweise unter einem Vakuum von kleiner oder gleich 400mbar ausgeführt. Die Massetemperatur im Extruder oder Kalander liegt in einem Bereich zwischen 150 und 220°C , bevorzugt in einem Bereich von 170°C bis 200°C und noch bevorzugter bei 190°C, insbesondere während des Extrudierens oder Kalandrierens.
Optional ist der Einsatz eines Treibmittels möglich, um geschäumte Abdichtungsbahnen zu erhalten. Dem Fachmann stehen bei Kenntnis der vorliegenden Erfindung hierbei vielfältige Möglichkeiten der Variation frei. So sind natürlich auch grössere bzw. kleinere Rollenbreiten möglich, auch sind dickere bzw. dünnere Rollendicken möglich.

Die Abdichtungsbahnen lassen sich im Bauwesen vielfältig einsetzen. Bspw. dienen sie als Fugenabdichtungen, Fassadenbänder bzw. Dachbahnen. Die Applikation ist ausgesprochen einfach und ohne Sicherheitsrisiko vielfältig varierbar. Bspw. werden die Abdichtungsbahnen ab Rolle unmittelbar und trägerlos an Fugen appliziert. Sie lassen sich bspw. mittels Epoxykleber verkleben und/oder bspw. mittels Heissluftverschweissung bzw. Silikondichtungsmassen fügen. Die Abdichtungsbahnen lassen sich in allen Breiten zwischen 10 cm und 200 cm schneiden. Prinzipiell sind natürlich geträgerte Verwendung der Abdichtungsbahnen möglich. Bspw. werden sie zusammen mit bereichsweisen Trägerschichten wie mit textilen Randstreifen oder sie werden zusammen mit bereichsunabhängigen Trägerschichten wie mit durchgehenden Streifen verwendet. Auch hier stehen dem Fachmann bei Kenntnis der vorliegenden Erfindung vielfältige Möglichkeiten der Variation frei. So ist natürlich ein Schneiden der Abdichtungsbahnen in kleinere bzw. grössere Breiten möglich.

## Patentansprüche

1. Abdichtungsbahn zur Verwendung im Bauwesen, bestehend aus einer Zusammensetzung enthaltend thermoplastische Polymere, **dadurch gekennzeichnet, dass** die Zusammensetzung mindestens ein epoxy-funktionelles Polymer in einem Anteil im Bereich von 20 Gew.-% und 70 Gew.-% bezogen auf das Gesamtgewicht der Zusammensetzung enthält, so dass die Abdichtungsbahn nach Verklebung mit einem Epoxykleber eine Haftkraft gemessen nach DIN 18555 von grösser oder gleich 2 N/mm² und/oder eine Schälkraft gemessen nach DIN 53357 von grösser oder gleich 50 N/cm aufweist, und dass die thermoplastischen Polymere keine Halogen- und/oder Schwefelgruppierungen enthalten, und dass die thermoplastischen Polymere keine Quervernetzungen zu anderen Polymeren der Zusammensetzung aufweisen oder ausbilden können.

2. Abdichtungsbahn nach Anspruch 1, **dadurch gekennzeichnet, dass** das epoxyfunktionelle Polymer ausgewählt ist aus der Gruppe bestehend aus Glycidylmethacrylat enthaltenden Polymeren.

3. Abdichtungsbahn nach Anspruch 2, **dadurch gekennzeichnet, dass** das epoxyfunktionelle Polymer ausgewählt ist aus der Gruppe bestehend aus Copolymeren aus Ethylen und Glycidylmethacrylat und Terpolymeren aus Ethylen, Methylacrylat und Glycidylmethacrylat.

4. Abdichtungsbahn nach Anspruch 3, **dadurch gekennzeichnet, dass** der Gehalt an Glycidylmethacrylat in einem Bereich von 3 bis 15 Gew.%, bezogen auf das Gewicht des Glycidylmethacrylat enthaltenden Polymeren vorliegt.

5. Abdichtungsbahn nach Anspruch 1 oder 4, **dadurch gekennzeichnet, dass** die epoxyfunktionellen Gruppen in der Zusammensetzung in einem Bereich von 2 bis 12 Gew.%, bezogen auf das Gesamtgewicht der Zusammensetzung vorliegen.

6. Abdichtungsbahnen nach einem der Ansprüche 1 bis 5, **dadurch gekennzeichnet, dass** das thermoplastische Polymer oder die Mischung thermoplastischer Polymere derart ausgewählt ist, dass die Zugfestigkeit gemessen nach ISO 527 einer aus diesen Polymeren bestehenden Abdichtungsbahn in Beanspruchungsrichtung grösser oder gleich 6 MPa ist.

7. Abdichtungsbahn nach einem der Ansprüche 1 bis 6, **dadurch gekennzeichnet, dass** die Zusammensetzung homogen ist.

8. Abdichtungsbahn nach einem der Ansprüche 1 bis 7, **dadurch gekennzeichnet, dass** die Zugfestigkeit gemessen nach ISO 527 der Abdichtungsbahn in Beanspruchungsrichtung grösser oder gleich 6 MPa ist.

9. Abdichtungsbahnen nach einem der Ansprüche 1 bis 8, **dadurch gekennzeichnet, dass** die Abdichtungsbahnen halogen-, bitumen- bzw. schwermetallfrei ist.

10. Abdichtungsbahn bestehend aus mehreren Schichten, **dadurch gekennzeichnet, dass** wenigstens eine der Schichten aus einer für die Abdichtungsbahn gemäss einem der Ansprüche 1 bis 9 bestehenden Zusammensetzung besteht.

11. Verfahren zum Herstellen einer Abdichtungsbahnen zur Verwendung im Bauwesen, enthaltend die folgenden Schritte
- Bereitstellen einer Zusammensetzung enthaltend mindestens ein thermoplastisches Polymer, und mindestens ein Epoxygruppen enthaltendes Polymer in einem Anteil im Bereich von 20 Gew.-% und 70 Gew.-% bezogen auf das Gesamtgewicht der Zusammensetzung, wobei das oder die thermoplastischen Polymere keine Halogen- und/oder Schwefelgruppierungen enthalten, und wobei die thermoplastischen Polymere keine Quervernetzungen zu anderen Polymeren der Zusammensetzung aufweisen oder ausbilden können;
- Auswählen des thermoplastischen Polymeren oder der Mischung thermoplastischer Polymere insbesondere derart, dass die Zugfestigkeit nach ISO 527 einer aus diesen Polymeren bestehenden Abdichtungsbahn in Beanspruchungsrichtung grösser oder gleich 6 MPa ist;
- Zugabe des Epoxygruppen enthaltenden Polymeren in einer solchen Menge, dass die Abdichtungsbahn nach Verklebung mit einem Epoxykleber eine Haftkraft gemessen nach DIN 18555 von grösser oder gleich 2 N/mm² und/oder eine Schälkraft gemessen nach DIN von grösser oder gleich 50 N/cm aufweisen,
- Überführung der Zusammensetzung in einen homogenen Zustand
- Formen der homogenen Zusammensetzung zu einer Abdichtungsbahn.

12. Verfahren nach Anspruch 11, **dadurch gekennzeichnet, dass** das Formen der Abdichtungsbahn durch Extrusion oder Kalandrieren erfolgt und dass das Überführen der Zusammensetzung in den homogenen Zustand in einem, insbesondere dem gleichen, Extruder oder Calander erfolgt.

13. Verfahren nach Anspruch 12, **dadurch gekennzeichnet, dass** die Extrusion und insbesondere die Überführung in den homogenen Zustand unter Vakuum kleiner oder gleich 400 mbar erfolgt.

14. Verfahren nach einem der Ansprüche 10 bis 13, **dadurch gekennzeichnet, dass** die Temperatur der Zusammensetzung im Extruder, während der Extrusion, in einem Bereich von 150°C bis 220°C, liegt.

15. Verfahren nach Anspruch 10 bis 14, **dadurch gekennzeichnet, dass** die Abdichtungsbahnen in einem einzigen Schritt als Endlosware in einer Breite zwischen 10 cm und 300 cm sowie einer Dicke von 0,4 mm bis 3 mm hergestellt werden.

16. Verwendung einer Zusammensetzung enthaltend mindestens ein Polymer mit mindestens einer Epoxygruppe in einem Anteil im Bereich von 20 Gew.-% und 70 Gew.-% bezogen auf das Gesamtgewicht der Zusammensetzung, und mindestens ein weiteres thermoplastisches Polymer zur Herstellung von Abdichtungsbahnen für das Bauwesen, wobei das oder die thermoplastischen Polymere keine Halogen- und/oder Schwefelgruppierungen enthalten, und wobei die thermoplastischen Polymere keine Quervernetzungen zu anderen Polymeren der Zusammensetzung aufweisen oder ausbilden können.

17. Verwendung einer Zusammensetzung von mindestens einem thermoplastischen Polymeren, welches keine Quervernetzungen zu anderen Polymeren aufweist oder ausbilden kann, und mindestens einem Epoxygruppen enthaltenden Polymeren in einem Anteil im Bereich von 20 Gew.-% und 70 Gew.-% bezogen auf das Gesamtgewicht der Zusammensetzung, welches keine Halogen- und/oder Schwefelgruppierung enthält, in einer Abdichtungsbahn zum Erlangen einer Haftkraft (nach DIN 18555) von mindestens 2 N/mm² nach Verkleben mit Epoxyklebern und/oder zum Erlangen von Verschweissbarkeit mit mindestens einer weiteren Abdichtungsbahn gleichen oder ähnlichen Erweichungspunktes.

18. Verfahren zum Verbinden von Abdichtungsbahnen aus thermoplastischen Materialien mit einem Untergrund, insbesondere Beton, **dadurch gekennzeichnet, dass** die Abdichtungsbahnen mindestens ein Polymer mit mindestens einer Epoxy-Funktion in einem Anteil im Bereich von 20 Gew.-% und 70 Gew.-% bezogen auf das Gesamtgewicht der Zusammensetzung enthalten und mit dem Untergrund bzw. mit sich selbst durch Verkleben mit einem Epoxykleber bzw. Verschweissen verbunden werden, und die thermoplastischen Materialien keine Halogen- und/oder Schwefelgruppierungen enthalten, wobei die thermoplastischen Materialien keine Quervernetzungen zu anderen Polymeren aufweisen oder ausbilden können.

19. Verwendung von Abdichtungsbahnen nach Anspruch 1 bis 10 als Fugenabdichtungen, Fassadenband bzw. Dachbahn.

## Claims

1. A sealing strip for use in the building and construction industry, comprising a composition containing thermoplastic polymers, **characterised in that** the composition contains at least one epoxy-functional polymer in a proportion in the range of 20% by weight and 70% by weight with respect to the total weight of the composition so that after glueing with an epoxy adhesive the sealing strip has an adhesive force measured in accordance with DIN 18555 of greater than or equal to 2N/mm² and/or a peeling force measured in accordance with DIN 53357 of greater than or equal to 50 N/cm, and that the thermoplastic polymers contain no halogen and/or sulphur groupings, and that the thermoplastic polymers have or can form no cross-linkings to other polymers of the composition.

2. A sealing strip according to claim 1 **characterised in that** the epoxy-functional polymer is selected from the group consisting of polymers containing glycidyl methacrylate.

3. A sealing strip according to claim 2 **characterised in that** the epoxy-functional polymer is selected from the group consisting of copolymers of ethylene and glycidyl methacrylate and terpolymers of ethylene, methyl acrylate and glycidyl methacrylate.

4. A sealing strip according to claim 3 **characterised in that** the content of glycidyl methacrylate is present in a range of 3 to 15% by weight with respect to the weight of the polymer containing glycidyl methacrylate.

5. A sealing strip according to claim 1 or claim 4 **characterised in that** the epoxy-functional groups in the composition are present in a range of 2 to 12% by weight with respect to the total weight of the composition.

6. A sealing strip according to one of claims 1 to 5 **characterised in that** the thermoplastic polymer or the mixture of thermoplastic polymers is so selected that the tensile strength measured in accordance with ISO 527 of a sealing strip consisting of those polymers in the direction of loading is greater than or equal to 6 MPa.

7. A sealing strip according to one of claims 1 to 6 **characterised in that** the composition is homogeneous.

8. A sealing strip according to one of claims 1 to 7 **characterised in that** the tensile strength measured in accordance with ISO 527 of the sealing strip in the direction of loading is greater than or equal to 6 MPa.

9. A sealing strip according to one of claims 1 to 8 **characterised in that** the sealing strip is free from halogen, bitumen or heavy metal.

10. A sealing strip comprising a plurality of layers **characterised in that** at least one of the layers consisting of a composition for the sealing strip according to one of claims 1 to 9.

11. A process for producing a sealing strip for use in the building and construction industry including the following steps:
- providing a composition containing at least one thermoplastic polymer and at least one polymer containing epoxy groups, in a proportion in the range of 20% by weight and 70% by weight with respect to the total weight of the composition, wherein the thermoplastic polymer or polymers contain no halogen and/or sulphur groupings and wherein the thermoplastic polymers have or can form no cross-linkings to other polymers of the composition;
- selecting the thermoplastic polymer or the mixture of thermoplastic polymers in particular in such a way that the tensile strength in accordance with ISO 527 of a sealing strip comprising those polymers in the direction of loading is greater than or equal to 6 MPa;
- adding the polymer containing epoxy groups in such an amount that the sealing strip after glueing with an epoxy adhesive has an adhesive force measured in accordance with DIN 18555 of greater than or equal to 2 N/mm² and/or a peeling force measured in accordance with DIN of greater than or equal to 50 N/cm;
- transforming the composition into a homogeneous condition; and
- forming the homogeneous composition into a sealing strip.

12. A process according to claim 11 wherein the operation of forming the sealing strip is effected by extrusion or calendering and that transformation of the composition into the homogeneous condition is effected in one, in particular the same, extruder or calender.

13. A process according to claim 12 **characterised in that** the extrusion operation and in particular transformation into the homogeneous condition is effected under a vacuum of less than or equal to 400 mbars.

14. A process according to one of claims 10 to 13 **characterised in that** the temperature of the composition in the extruder during the extrusion operation is in a range of 150°C to 220°C.

15. A process according to claims 10 to 14 **characterised in that** the sealing strips are produced in a single step in the form of an endless product of a width of between 10 and 300 cm and a thickness of 0.4 mm to 3 mm.

16. Use of a composition containing at least one polymer with at least one epoxy group in a proportion in the range of 20% by weight and 70% by weight with respect to the total weight of the composition and at least one further thermoplastic polymer for the production of sealing strips for the building and construction industry, wherein the thermoplastic polymer or polymers contains or contain no halogen and/or sulphur groupings and wherein the thermoplastic polymers have or can form no cross-linkings to other polymers of the composition.

17. Use of a composition of at least one thermoplastic polymer which has or can form no cross-linkings to other polymers and at least one polymer containing epoxy groups in a proportion in the range of 20% by weight and 70% by weight with respect to the total weight of the composition which contains no halogen and/or sulphur grouping in a sealing strip for achieving an adhesive force (in accordance with DIN 18555) of at least 2 N/mm² after glueing with epoxy resins and/or for achieving weldability to at least one further sealing strip of the same or similar softening point.

18. A process for connecting sealing strips of thermoplastic material to a substrate, in particular concrete, **characterised in that** the sealing strips contain at least one polymer with at least one epoxy function in a proportion in the range of 20% by weight and 70% by weight with respect to the total weight of the composition and are connected to the substrate or themselves by glueing with an epoxy adhesive or welding, and the thermoplastic materials do not contain any halogen and/or sulphur groupings, wherein the thermoplastic materials have or can form no cross-linkings to other polymers.

19. Use of sealing strips according to claims 1 to 10 as joint seals, a facade strip or a roof strip.

## Revendications

1. Bande d'étanchéité pour utilisation dans la construction, constituée d'une composition contenant des polymères thermoplastiques, **caractérisée en ce que** la composition contient au moins un polymère à fonctionnalité époxy, dans une proportion comprise dans la plage de 20 à 70 % en poids par rapport au poids total de la composition, de telle sorte que la bande d'étanchéité, après collage avec un adhésif époxy, présente une force d'adhérence, mesurée selon DIN 18555, supérieure ou égale à 2 N/mm² et/ou une résistance au pelage, mesurée selon DIN 53357, supérieure ou égale à 50 N/cm, **en ce que** les polymères thermoplastiques ne contiennent aucun groupement halogène et/ou soufre, et **en ce que** les polymères thermoplastiques ne comportent ou peuvent créer des réticulations croisées avec d'autres polymères de la composition.

2. Bande d'étanchéité selon la revendication 1, **caractérisée en ce que** le polymère à fonctionnalité époxy est choisi dans le groupe consistant en les polymères contenant du méthacrylate de glycidyle.

3. Bande d'étanchéité selon la revendication 2, **caractérisée en ce que** le polymère à fonctionnalité époxy est choisi dans le groupe consistant en les copolymères de l'éthylène et du méthacrylate de glycidyle, et les terpolymères de l'éthylène, de l'acrylate de méthyle et du méthacrylate de glycidyle.

4. Bande d'étanchéité selon la revendication 3, **caractérisée en ce que** la teneur en méthacrylate de glycidyle est comprise dans une plage de 3 à 15 % en poids par rapport au poids du polymère contenant le méthacrylate de glycidyle.

5. Bande d'étanchéité selon la revendication 1 ou 4, **caractérisée en ce que** les groupes à foncionnalité époxy sont présents dans la composition en une quantité comprise dans la plage de 2 à 12 % en poids par rapport au poids total de la composition.

6. Bande d'étanchéité selon l'une des revendications 1 à 5, **caractérisée en ce que** le polymère thermoplastique, ou le mélange de polymères thermoplastiques, est choisi de telle sorte que la résistance à la traction, mesurée selon ISO 527, d'une bande d'étanchéité constituée de ces polymères, soit dans la direction de la charge supérieure ou égale à 6 MPa.

7. Bande d'étanchéité selon l'une des revendications 1 à 6, **caractérisée en ce que** la composition est homogène.

8. Bande d'étanchéité selon l'une des revendications 1 à 7, **caractérisée en ce que** la résistance à la traction, mesurée selon ISO 527, de la bande d'étanchéité est dans la direction de la charge supérieure ou égale à 6 MPa.

9. Bandes d'étanchéité selon l'une des revendications 1 à 8, **caractérisées en ce que** les bandes d'étanchéité sont exemptes d'halogène, de bitume et de métaux lourds, respectivement.

10. Bande d'étanchéité constituée de plusieurs couches, **caractérisée en ce qu'**au moins l'une des couches est constituée d'une composition constituant la bande d'étanchéité selon l'une des revendications 1 à 9.

11. Procédé de fabrication d'une bande d'étanchéité pour utilisation dans la construction, comprenant les étapes suivantes :
- obtention d'une composition contenant au moins un polymère thermoplastique et au moins un polymère contenant des groupes époxy, dans une proportion comprise dans la plage de 20 à 70 % en poids par rapport au poids total de la composition, le ou les polymères thermoplastiques ne contenant pas de groupements halogène et/ou soufre, et les polymères thermoplastiques ne comportent ou peuvent créer de réticulations croisées avec d'autres polymères de la composition ;
- sélection du polymère thermoplastique ou du mélange de polymères thermoplastiques, notamment de telle sorte que la résistance à la traction, selon ISO 527, d'une bande d'étanchéité constituée de ces polymères, soit dans la direction de la charge supérieure ou égale à 6 MPa ;
- addition du polymère contenant des groupes époxy, en une quantité telle que la bande d'étanchéité, après collage avec un adhésif époxy, présente une force d'adhérence, mesurée selon DIN 18555, supérieure ou égale à 2 N/mm² et/ou une résistance au pelage, mesurée selon DIN, supérieure ou égale à 50 N/cm.
- opération consistant à amener la composition dans un état homogène,
- façonnage de la composition homogène, pour obtenir une bande d'étanchéité.

12. Procédé selon la revendication 11, **caractérisé en ce que** le façonnage de la bande d'étanchéité s'effectue par extrusion ou calandrage, et **en ce que** l'opération consistant à amener la composition dans un état homogène est effectuée dans une extrudeuse ou une calandre, en particulier la même extrudeuse ou la même calandre.

13. Procédé selon la revendication 12, **caractérisé en ce que** l'extrusion, et en particulier l'opération d'amenée dans un état homogène, s'effectuent sous un vide inférieur ou égal à 400 mbar.

14. Procédé selon l'une des revendications 10 à 13, **caractérisé en ce que** la température de la composition dans l'extrudeuse pendant l'extrusion est comprise dans la plage de 150 à 220 °C.

15. Procédé selon l'une des revendications 10 à 14, **caractérisé en ce que** les bandes d'étanchéité sont fabriquées en une étape unique, en tant que produit continu d'une largeur comprise entre 10 et 300 cm, et d'une épaisseur de 0,4 à 3 mm.

16. Utilisation d'une composition contenant au moins un polymère comportant au moins un groupe époxy dans une proportion comprise dans la plage de 20 à 70 % en poids par rapport au poids total de la composition, et au moins un autre polymère thermoplastique, pour fabriquer des bandes d'étanchéité pour la construction, le ou les polymères thermoplastiques ne contenant aucun groupement halogène et/ou soufre, et les polymères thermoplastiques ne comportent ou peuvent créer de réticulations croisées avec d'autres polymères de la composition.

17. Utilisation d'une composition d'au moins un polymère thermoplastique, qui ne comporte ou peut créer de réticulations croisées avec d'autres polymères, et d'au moins un polymère contenant des groupes époxy dans une proportion comprise dans la plage de 20 à 70 % en poids par rapport au poids total de la composition, qui ne contient aucun groupement halogène et/ou soufre, dans une bande d'étanchéité pour obtenir une force d'adhérence (selon DIN 18555) d'au moins 2 N/mm² après collage avec des adhésifs époxy, et/ou pour obtenir une aptitude au soudage avec au moins une autre bande d'étanchéité ayant un point de ramollissement égal ou analogue.

18. Procédé de liaison de bandes d'étanchéité constituées de matériaux thermoplastiques avec un support, en particulier du béton, **caractérisé en ce que** les bandes d'étanchéité contiennent au moins un polymère ayant au moins une fonction époxy dans une proportion comprise dans la plage de 20 à 70 % en poids par rapport au poids total de la composition, et sont liées au support, ou à elles-mêmes, par collage avec un adhésif époxy ou par soudage, et **en ce que** les matériaux thermoplastiques ne contiennent aucun groupement halogène et/ou soufre. les matériaux thermoplastiques ne comportent ou peuvent créer des réticulations croisées avec d'autres polymères.

19. Utilisation de bandes d'étanchéité selon les revendications 1 à 10, en tant qu'éléments de calfeutrage de joints, bande de façade ou bande de toiture.
